# EUROPÄISCHE PATENTANMELDUNG

(11) **EP 4 755 791 A1**
(43) Veröffentlichungstag der Anmeldung: **10.06.2026**
(21) Anmeldenummer: 25218639.0
(22) Anmeldetag: 26.11.2025
(51) Int. Cl.: B64B 1/24

(54) **LUFTSSCHIFFSANTRIEBSMITTELSANORDNUNG**

(30) Priorität: 04.12.2024 LU 509202
(71) Anmelder: Wirtz Meyer GmbH, 02929 Rothenburg/OL (DE)
(72) Erfinder: MEYER, Oscar, 01067 Dresden (DE); MEYER, Ferdinand, 01067 Dresden (DE)
(74) Vertreter: Gruner, Leopold Joachim

(57) **Zusammenfassung**

Die vorliegende Erfindung betrifft das Gebiet der Steuerungs- und Antriebstechnik, insbesondere Luftschiffantriebsmittelanordnungen, Luftschiffe, die diese aufweisen, sowie Verfahren zur Steuerung des Luftschiffes. Die Anordnung zeichnet sich dabei dadurch aus, dass sie ein Manövrieren und Antreiben eines Luftschiffes in allen 6 Freiheitsgraden ermöglicht.

## Beschreibung

### TECHNISCHES GEBIET

Die vorliegende Erfindung bezieht sich auf eine Luftschiffsantriebsmittelanordnung, ein Luftschiff, das diese Anordnung aufweist, sowie ein Verfahren zur Steuerung der Luftschiffsantriebsanordnung.

### STAND DER TECHNIK

In der Entwicklung von Luftschiffantriebssystemen wurden verschiedene Ansätze verfolgt, um die Manövrierfähigkeit und Effizienz von Luftschiffen zu verbessern. Traditionelle Luftschiffe nutzen häufig Kombinationen aus starren oder schwenkbaren Motoren und Finnen, die als Höhen- oder Seitenruder dienen. Diese Konfigurationen ermöglichen grundlegende Flugmanöver wie Vorwärtsflug, Steig- und Sinkflug sowie begrenzte Richtungsänderungen. Allerdings erlauben sie oft keine seitliche Bewegung entlang der Y-Achse und können nicht in allen sechs Freiheitsgraden operieren.

Verschiedene Lösungen, die einen Ansatz verfolgen, um dieses Problem zu lösen, sind aus dem Stand der Technik bekannt, jedoch jeweils mit verschiedenen Nachteilen verbunden:
Die Patentschrift US 11731789 B2 beschreibt ein Hybridluftschiff, das mindestens eine Auftriebshülle enthält, welche ein Gas leichter als Luft beherbergt. Eine Gondel ist unterhalb der Auftriebshülle angebracht und erstreckt sich entlang einer Längsachse. Propeller sind an der Auftriebshülle befestigt und dienen dem Antrieb des Luftschiffs. Die Generatoren, welche die Propeller mit Energie versorgen, sind über Arme mit der Gondel verbunden. Diese Arme ragen seitlich von der Gondel hervor und verbinden die Generatoren mit der Gondel. Allerdings ist dieses Hybridluftschiff nicht in der Lage, seitliche Bewegungen entlang der Y-Achse auszuführen und kann nicht in allen sechs Freiheitsgraden operieren.

Weitere aktuell in Entwicklung befindliche Luftschiffe wie das LCA60T (Flying Whales - LCA60T rigid cargo airship, Artikel von Peter Lobner, aktualisiert am 24. Juni 2024, https://lynceans.org/wp-content/uploads/2021/09/Flying-Whales_R2-converted-compressed-1.pdf, abgerufen am 19.11.2024), das AT2 Aerospace Luftschiff (https://www.at2aero.space/, abgerufen am 19.11.2024) oder das Euroairship (Artikel von Peter Lobner, aktualisiert am 17. August 2023, "Euro Airship - rigid airships", https://lynceans.org/wp-content/uploads/2021/04/Euro-Airship.pdf, abgerufen am 19.11.2024) nutzen verschiedene Kombinationen aus starren oder schwenkbaren Motoren und Finnen. Obwohl sie für spezifische Anwendungen optimiert sind, weisen sie ähnliche Einschränkungen hinsichtlich der seitlichen Bewegungsfähigkeit und der Fähigkeit auf, in allen sechs Freiheitsgraden zu operieren.

In der US 11,299,249 B2 wird ein Luftschiff offenbart, das in allen sechs Freiheitsgraden operieren soll. Es verfügt über acht fest am Luftschiffrumpf angebrachte Motoren, die in einem 45-Grad-Winkel entlang der X-, Y- und Z-Achsen ausgerichtet sind. Allerdings weist diese Lösung mehrere Einschränkungen auf: eine verringerte Effizienz im Vorwärtsflug, da der Hauptantrieb hinter dem Luftschiffkörper positioniert ist und nicht frei angeströmt wird; eine reduzierte Schubnutzung, weil der Schub für den Vorwärtsflug aufgrund der festen Anordnung der Motoren nicht optimal genutzt werden kann und eine ineffiziente Motorennutzung, da bei einer Bewegung nur vier der acht Motoren aktiv beteiligt sind. Hierbei ist weiterhin nachteilig ein dauerhaftes Ausgleichen der induzierten Rollbewegung durch das singuläre Hecktriebwerk notwendig.

Die Patentschrift WO 2024 / 218274 A1 betrifft ein Luftfahrzeug mit zumindest drei nicht kollinearen Triebwerken, die jeweils dazu eingerichtet sind einen vektorisierten Schub in eine Richtung bereitzustellen und dabei unabhängig voneinander bewegbar sind. Diese sind im Wesentlichen äquatorial oder parallel verschoben an der Triebwerkshülle angeordnet, eine gezielte Bewegung in sechs Freiheitsgraden ist nicht explizit beschrieben.

Die Patentschrift US 1,979,345 betrifft ein Fahrzeug, das sich sowohl auf dem Wasser als auch in der Luft fortbewegen kann. Es verfügt über eine Antriebsanordnung, die aus einem zentral am Bug des Schiffes angeordneten Zugluftpropeller 10, einem durchgehenden Längsrohr und einem Schubluftpropeller 11 besteht, der mit dem Propeller 10 am Bug zusammenwirkt. Darüber hinaus verfügt das Fahrzeug über vier Gruppen von jeweils vier Propellern in Rahmen 15, die es ermöglichen, sich von links nach rechts und von oben nach unten zu bewegen. Dabei fungieren die 16 in vier Gruppen angeordneten Segelpropeller 14 zur Ausrichtung und die Antriebspropeller 10 und 11 für den Antrieb des Luftschiffes in der Luft.

Das Gebrauchsmuster DE 20 2011 050 944 U1 beschreibt eine schwebende Kamerahalterung, die einen Auftriebskörper umfasst, der durch eine Ballonhülle gebildet wird, und die von einem ringförmigen Träger umfasst wird. An diesem Träger sind mehrere Propellereinheiten gleichmäßig um den Umfang verteilt, sodass eine dreidimensionale Navigation in der Luft möglich ist. Die Propellereinheiten sind dabei äquatorial um den Träger angeordnet.

Die Patentschrift US 2007 / 0075184 A1 beschreibt eine Antriebsvorrichtung mit einer speziell ausgestalteten Basis zur Befestigung an der Hülle eines Luftschiffs sowie eine Anordnung dieser Antriebsvorrichtungen an einem Luftschiff. Ein von der Basis wegragendes Verlängerungselement umfasst eine an dessen gegenüberliegendem Ende befestigte Motorvorrichtung, die mit Spannseilen an der Hülle befestigt ist. Das Verlängerungselement ist zur Reduzierung des Luftwiderstands tragflächenförmig oder in einer anderen aerodynamischen Form gestaltet.

Der Stand der Technik zeigt, dass bestehende Luftschiffantriebssysteme entweder nicht in allen sechs Freiheitsgraden operieren können oder Kompromisse bei der Effizienz und Skalierbarkeit eingehen müssen. Insbesondere fehlt es an Lösungen, die eine effiziente seitliche Bewegung ermöglichen und gleichzeitig für den Vorwärtsflug optimiert sind. Die genannten Systeme weisen Einschränkungen auf, die ihre Anwendbarkeit für bestimmte Aufgaben und die Integration in größere Luftschiffe begrenzen.

### AUFGABE

Es besteht daher ein Bedarf an einem Antriebssystem für Luftschiffe, das sowohl einen effizienten Vorwärtsflug als auch Bewegungen in allen sechs Freiheitsgraden ermöglicht. Eine solche Lösung sollte die genannten Nachteile überwinden, indem sie eine bessere Schubnutzung, reduzierte aerodynamische Nachteile und eine breite Anwendbarkeit aufgrund der guten Skalierbarkeit, die eine universelle Adaption der Anordnung sowohl für kleinere unbemannte als auch für größere bemannte Luftschiffe bietet.

### LÖSUNG

Die Aufgabe wird durch eine Luftschiffsantriebsanordnung mit den Merkmalen des Anspruchs 1 gelöst. Die Aufgabe wird weiterhin durch ein Luftschiff gelöst, die diese Antriebsanordnung aufweist, sowie ein Verfahren zur Steuerung dieses Luftschiffes.

Weitere vorteilhafte Ausgestaltungen und Weiterbildungen ergeben sich aus den Unteransprüchen sowie aus der Beschreibung und Ausführungsbeispielen unter Bezugnahme auf die Figuren.

### AUSFÜHRLICHE BESCHREIBUNG

Die vorliegende Erfindung betrifft eine Luftschiffantriebsmittelanordnung, angeordnet an einem Luftschiff, auch als Antriebsanordnung bezeichnet, zum direkten Manövrieren und Antreiben des Luftschiffes (1.0) in sechs Freiheitsgraden (2.1, 2.2, 2.3, 2.4, 2.5, 2.6), aufweisend zumindest oder bevorzugt genau:
- sechs Antriebsmittelträgerelemente (4.0), bevorzugter sechs bis zwölf Antriebsmittelträgerelemente (4.0), angeordnet in einer ersten Trägerelementgruppe (4.1) im vorderen Drittel des Luftschiffes (1.0), und einer zweiten Trägerelementgruppe (4.2), angeordnet im hinteren Drittel des Luftschiffes (1.0),
- wobei an jedem Antriebsmittelträgerelement (4.0) ein Antriebsmittel (3.0), bevorzugter ein bis drei Antriebsmittel (3.0), angeordnet ist, wobei das Antriebsmittel (3.0) beabstandet zu einer Luftschiffhülle (1.1) angeordnet ist,
- wobei die Antriebsmittel jeweils eine Antriebsachse (3.1) und einen Antriebsradius (3.2) aufweisen, wobei die Antriebsmittel (3.0) bevorzugt ausgewählt werden aus der Liste bestehend aus Propeller (3.3), Turboprop oder Turbine,
- wobei jedes Antriebsmittelträgerelement (4.0) an einem Ankerelement (4.3) angeordnet ist, wobei das Ankerelement (4.3) eine Ankerachse (4.4) aufweist, wobei die Ankerachse (4.4) bevorzugt parallel zu einer Längsachse (6.0) des Luftschiffes (1.0) ist,
- wobei das Ankerelement (4.3) an und/oder direkt auf der Luftschiffhülle (1.1) angeordnet ist, und bevorzugt ein distaler Teil einer Stützstruktur (1.2) des Luftschiffes (1.0) ist,
- wobei das Antriebsmittelträgerelement (4.0) als Finne oder Ruder ausgestaltet ist,
wobei das Antriebsmittelträgerelement (4.0) ein Aktuator (5.0) aufweist, bevorzugt einen oder zwei Aktuatoren (5.0), wobei die Antriebsmittel dazu eingerichtet sind, den Gesamtschub zum direkten Manövrieren und Antreiben eines Luftschiffes (1.0) in sechs Freiheitsgraden bereitzustellen, wobei jedes Antriebsmittel (3.0), bevorzugt unabhängig von allen anderen Antriebsmitteln (3.0), durch den am Antriebsmittelträgerelement (4.0) angeordneten Aktuator (5.0) schwenkbar angeordnet ist, sodass die Ausrichtung der Antriebsachse (3.1) relativ zur Ankerachse (4.4) geändert werden kann. Dies erlaubt ein gleichzeitiges Manövrieren und Antreiben des Luftschiffes, wobei die Antriebsachse bevorzugt der Schubachse entspricht, wobei bevorzugt der Schub aller Antriebsmittel unabhängig voneinander geregelt und/oder gesteuert werden kann. Durch die gleichzeitige Ausrichtung mehrerer Antriebsmittel kann somit ein hoher Schub in alle sechs Freiheitsgrade erzielt werden, durch die Beabstandung der Antriebe können diese weiterhin frei angeströmt werden, was die Effizienz der Anordnung weiter erhöht.

Ein "Luftschiff" im Sinne der vorliegenden Erfindung ist ein flugfähiges Luftfahrzeug, das seine Auftriebskraft durch eine mit einem leichten Gas, bevorzugt Helium oder Wasserstoff, gefüllte Hülle erzeugt, welche leichter als die umgebende Luft ist. Es kann als unstarres, halbstarres oder starres Luftschiff ausgestaltet sein. Ein unstarres Luftschiff weist dabei eine Hülle bestehend aus flexiblem Material ohne innere Tragstruktur auf und wird durch den Gasdruck stabilisiert. Ein halbstarres Luftschiff weist dabei eine Hülle auf, die durch eine Kombination aus Gasdruck und einer integrierten Tragstruktur verstärkt ist, um zusätzliche Stabilität zu bieten. Ein starres Luftschiff weist dabei eine Hülle auf, die durch eine äußere Tragstruktur aus festen Materialien gestützt wird, die die aerodynamische Form und Stabilität des Luftschiffes unabhängig vom Gasdruck gewährleisten. Das Luftschiff umfasst eine Luftschiffantriebsmittelanordnung, die Schubkräfte erzeugt, um das Fahrzeug zu bewegen und zu manövrieren. Diese Schubkräfte erlauben präzises Steuern in sechs Freiheitsgraden.

In einigen bevorzugten Ausführungsformen ist das Luftschiff als einer spindelförmiger, bevorzugt rotationssymmetrischer Körper ausgeführt. Vorzugsweise kann die Vorderseite und/oder die Rückseite des Luftschiffes stromlinienförmig ausgestaltet sein, wodurch eine aerodynamisch optimierte Form entsteht. In weiteren Ausführungsformen verfügt das Luftschiff über eine abgerundete Vorder- und/oder Rückseite. Mathematisch betrachtet kann ein Luftschiff im Sinne der vorliegenden Erfindung einem prolaten Rotationsellipsoid oder einem langgestreckten Zylinder mit abgerundeten Enden aufgefasst werden.

Ein "Antriebsmittel", auch einfach als "Antrieb" bezeichnet, im Sinne der vorliegenden Erfindung bezeichnet eine Vorrichtung zur Erzeugung von Schubkraft, die dazu dient, ein Luftschiff zu manövrieren und anzutreiben, vorzugsweise direkt in den sechs hierhin beschriebenen Freiheitsgraden. Bevorzugte Ausführungsformen des Antriebsmittels sind Propeller, Turboprops oder Turbinen. Jedes Antriebsmittel weist eine Antriebsachse auf, entlang der die Schubkraft wirkt, sowie einen Antriebsradius, der den maximalen radialen Abstand von der Antriebsachse zum äußeren Ende des Antriebsmittels definiert.

Ein "Antriebsradius" im Sinne der vorliegenden Erfindung bezeichnet dabei die maximale radiale Ausdehnung des Antriebsmittels. Dies ist bevorzugt bei Propellern oder Turboprop Antriebsmitteln die Rotorblattlänge inkl. Nabe, also der Propellerradius oder Rotorradius, bei Turbinen der Turbinenradius.

In einigen bevorzugten Ausführungsformen umfasst das Antriebsmittel eine Antriebsquelle, wie z. B. einen Verbrennungsmotor, eine Turbine oder einen Elektromotor, sowie ein Kraftübertragungsmittel, wie einen Propeller, Impeller oder Rotor, welches die von der Antriebsquelle generierte Kraft auf ein Medium, vorzugsweise Luft, überträgt. Das Antriebsmittel kann jedoch in alternativen Ausführungsformen auch lediglich ein Kraftübertragungsmittel aufweisen, welches indirekt, z. B. über ein Getriebe, mit einer entfernt angeordneten Antriebsquelle verbunden ist, die beispielsweise innerhalb des Luftschiffes angeordnet ist und mehrere Antriebsmittel gleichzeitig versorgen kann.

Ein "Antriebsmittelträgerelement", auch einfach als "Trägerelement" bezeichnet, ist ein strukturelles Bauteil, das jedes Antriebsmittel beabstandet zur Luftschiffhülle anordnet. Es dient als Verbindung zwischen dem Antriebsmittel und dem Ankerelement und gewährleistet eine optimale Positionierung des Antriebsmittels, um eine effiziente Anströmung und somit maximale Schuberzeugung zu ermöglichen. Vorzugsweise können an einem Antriebsmittelträgerelement ein bis drei Antriebsmittel angeordnet werden, besonders bevorzugt genau eins. In einigen Ausführungsformen können zwei Antriebsmittel bevorzugt sein, z.B. gegenüberliegend angeordnet ein Antriebsmittel in und eins entgegen der Flugrichtung.

In einigen bevorzugten Ausführungsformen der Luftschiffantriebsmittelanordnung sind die Antriebsmittelträgerelemente als Finnen oder Ruder ausgestaltet, was zusätzliche aerodynamische Vorteile bietet. Sie unterstützen nicht nur die Befestigung der Antriebsmittel, sondern tragen auch zur aerodynamischen Steuerung des Luftschiffs bei und erzeugen Auf- und/oder Abtrieb. Dies ist ein Vorteil gegenüber im Stand der Technik üblicher Aufhängungen von Antriebsmitteln, die in der Regel nur der strukturellen Integrität dienen.

Ein "Aktuator" bezeichnet eine mechanische oder mechatronische Komponente, die es ermöglicht, das Antriebsmittelträgerelement und/oder das Antriebsmittel, um eine oder mehrere Achsen zu rotieren oder zu schwenken.

Dies erlaubt eine flexible Ausrichtung der Antriebsachse und somit eine präzise Steuerung des Schubvektors, was für die Manövrierfähigkeit des Luftschiffs in allen sechs Freiheitsgraden entscheidend ist.

Bevorzugt ist, neben dem Schwenken und/oder Rotieren der Antriebsmittel durch den Aktuator, der an und/oder in dem Antriebsmittelträger angeordnet ist, auch der Schub der einzelnen Antriebsmittel gezielt steuerbar. In einer besonders bevorzugten Ausführungsform sind dabei alle Antriebsmittel innerhalb einer Antriebsgruppe, bevorzugter alle Antriebsmittel der Luftschiffantriebsmittelanordnung unabhängig voneinander gezielt steuerbar. Steuerbar bedeutet in diesem Kontext, dass der Schub variiert, also geregelt werden kann, oder auch komplett invertiert oder ausgeschaltet werden kann. Durch Umkehrschub wird der Vektor des Schubes invertiert, wodurch Bewegungen entlang bestimmter Freiheitsgrade besser möglich ist.

Zur Gewährleistung einer hohen Manövrierfähigkeit ist jedes Antriebsmittelträgerelement mit einem Aktuator ausgestattet. Dieser Aktuator ermöglicht es, das Antriebsmittel, um seine Antriebsachse zu rotieren oder zu schwenken, bevorzugt unabhängig von den anderen Antriebsmitteln. Dadurch kann der Schubvektor jedes Antriebsmittels individuell angepasst werden, was eine präzise Steuerung des Luftschiffs in allen Bewegungsrichtungen ermöglicht. Besonders bevorzugt wird der Aktuator ausgewählt aus der Liste bestehend aus elektrischem, mechanischem, pneumatischem, magnetischem Aktuator, oder einer Kombination daraus. Bevorzugte Ausgestaltungsformen umfassen oder bestehen aus elektromagnetischen Drehgelenken, pneumatischen Stellzylindern, Kardan oder Gelenkmechanismen, hydraulischen Zylinder, Schrittmotoren, und Servo-Motoren.

In einigen bevorzugten Ausführungsformen erlaubt das Aktuator eine Bewegung um eine Achse, und ist beispielsweise als Servo-Motor ausgestaltet. Dies erlaubt eine kontrollierte Bewegung und eine stabilere Bauweise.

In einigen bevorzugten Ausführungsformen können verschiedene Aktuator an einem Antriebsmittelträgerelement angeordnet werden und so eine komplexere Bewegung um mehrere Achsen gleichzeitig erlauben.

In bevorzugten Ausführungsformen sind die Antriebsmittel in zwei Gruppen angeordnet: eine erste Gruppe im vorderen Drittel des Luftschiffs und eine zweite Gruppe im hinteren Drittel. Jede Gruppe umfasst vorzugsweise 3 bis 6 Antriebsmittel, die um die Luftschiffhülle verteilt sind. Diese Anordnung ermöglicht eine gleichmäßige Verteilung der Schubkräfte und verbessert die Stabilität und Kontrolle des Luftschiffs. Besonders bevorzugt sind die Antriebsmittel einer Gruppe auf gegenüberliegenden Seiten der Luftschiffhülle angeordnet, besonders bevorzugt gleichverteilt um die Luftschiffhülle.

Ein Antriebsmittel, insbesondere wenn es als Rotor oder Turboprop ausgestaltet ist, kann zwei verschiedene Drehrichtungen aufweisen. Im Rahmen der vorliegenden Erfindung werden diese Drehrichtungen mit "+" und "-" bezeichnet, wobei "+" für eine rechtsdrehende und "-" für eine linksdrehende Drehrichtung steht. Diese Definition ist austauschbar, sofern sie konsistent auf alle Antriebsmittel einer Luftschiffsantriebsmittelanordnung angewendet wird.

In einer besonders bevorzugten Ausführungsform sind die Drehrichtungen der Antriebsmittel in einer Luftschiffantriebsanordnung im Sinne der vorliegenden Erfindung paarweise gegensätzlich gewählt, um Rollbewegungen des Luftschiffes auszugleichen. Dieser Ausgleich kann entweder innerhalb einer Trägerelementgruppe oder über mehrere Trägerelementgruppen hinweg erfolgen. Die gegensätzliche Paarung der Drehrichtungen trägt dazu bei, unerwünschte Drehmomente zu minimieren und die Stabilität des Luftschiffes zu erhöhen.

In einer weiteren bevorzugten Ausführungsform mit acht Antriebsmitteln können die Drehrichtungen der Antriebsmittel entweder paarweise oder diagonal kreuzweise gegensätzlich gewählt werden. Diese Anordnung ermöglicht es, Rotationsbewegungen entweder innerhalb einer einzelnen Trägerelementgruppe oder über eine erste und eine zweite Trägerelementgruppe hinweg auszugleichen. Diese Anordnung verbessert die aerodynamische Effizienz und die Manövrierfähigkeit des Luftschiffes erheblich, da sie unerwünschte Rotationskräfte reduziert und gleichzeitig eine gleichmäßige Verteilung der Schubkräfte gewährleistet.

Ein "Ankerelement" ist eine Befestigungsvorrichtung oder die Fläche unter einem Antriebsmittelträgerelement, die an der Luftschiffhülle angeordnet ist und eine Ankerachse aufweist. Es fungiert als Verbindungspunkt zwischen dem Antriebsmittelträgerelement und der Struktur des Luftschiffs. Das Ankerelement ist bevorzugt ein distaler Teil einer Stützstruktur des Luftschiffs und trägt zur strukturellen Integrität und Stabilität der gesamten Anordnung bei.

In einigen bevorzugten Ausführungsformen stellt das Ankerelement lediglich die Fläche unter dem Antriebsmittelträgerelement dar, welche in diesem Fall nahtlos in die Stützstruktur übergeht. Diese Fläche fungiert als Referenzpunkt, um die Ausrichtung der Antriebsmittel sowie deren Abstand zur Luftschiffhülle zu bestimmen.

Die "Ankerachse" ist eine Gerade, die bevorzugt parallel zur Längsachse des Luftschiffs verläuft und durch den höchsten Schnittpunkt des Antriebsmittelträgerelements mit der Luftschiffhülle führt, also durch den Punkt mit dem höchsten Abstand zur Längsachse. Sie dient als Referenz für die Rotation des Antriebsmittels um seine Antriebsachse, wobei die Relativbewegung durch die Projektion der beiden Achsen auf eine gemeinsame Ebene definiert wird. Diese Definition bezweckt, dass die minimale Beabstandung des Antriebsmittels zur Luftschiffhülle gleichzeitig die geringste Distanz zur Luftschiffhülle darstellt, was einen sicheren und verwirbelungsfreien Betrieb ermöglicht.

In einigen bevorzugten Ausführungsformen ist die Ankerachse parallel zur Längsachse. Dies ermöglicht eine einfache Ansteuerung der Antriebsmittel, da diese eine gemeinsame Bezugsachse haben.

In einigen alternativ bevorzugten Ausführungsformen kann die Ankerachse geneigt im Bezug zur Längsachse sein, bevorzugt im Bereich von 0 bis 20°. Dies erlaubt individuellere Lösungen für spezialisierte Luftschiffe, bei denen die Bewegung um bestimmte Freiheitsgrade stärker ausgeprägt ist.

Unter einer "Stützstruktur" im Sinne der vorliegenden Erfindung versteht man die tragenden Elemente oder die Gesamtheit aller tragenden Elemente, die die Luftschiffhülle aufspannen und sämtliche weiteren Bauteile des Luftschiffes stabil miteinander verbinden. Diese Struktur ist wesentlich für die statische Stabilität und die strukturelle Integrität des Luftschiffes. Durch die direkte Verbindung der Antriebsmittelträgerelemente mit der Stützstruktur wird sichergestellt, dass die Kräfte des Gesamtschubs gleichmäßig verteilt werden können. Dies ermöglicht ein präzises und stabiles Manövrieren des Luftschiffes in allen sechs Freiheitsgraden. Die Stützstruktur gewährleistet nicht nur die Verbindung der Antriebsmittelträgerelemente mit der Hülle, sondern spielt auch eine zentrale Rolle bei der Verteilung der durch den Schub erzeugten Kräfte. Dies minimiert Belastungen auf die Hülle und sorgt für eine gleichmäßige Kraftübertragung, wodurch die Manövrierfähigkeit optimiert, und die strukturelle Belastung reduziert wird.

In einigen bevorzugten Ausführungsformen, die unstarre Luftschiffe betreffen, ist die Stützstruktur typischerweise Teil der Hülle selbst und wird beispielsweise durch verstärkte Gewebelagen oder andere integrierte Verstärkungen realisiert. Diese Bauweise nutzt den internen Gasdruck zur Stabilisierung der Form und der strukturellen Integrität.

In einigen bevorzugten Ausführungsformen, die halbstarre und/oder starre Luftschiffe betreffen, ist die Stützstruktur starrer ausgeführt und wird bevorzugt als Streben-, Gerüst-, Flächenkonstruktion oder einer Kombination davon ausgestaltet. Diese besteht vorzugsweise aus Leichtbaumaterialien wie Kohlenstofffaser- oder Glasfaserverbundstoffen, Kunststoffen, Aluminium- oder Titanlegierungen oder einer Kombination davon. Diese Materialien verbinden eine hohe Stabilität mit einem geringen Gewicht und tragen so entscheidend zur Effizienz und Leistungsfähigkeit des Luftschiffes bei.

In einigen bevorzugten Ausführungsformen, insbesondere bei halbstarren und starren Luftschiffen, sind gegenüberliegende Antriebsmittelträgerelemente direkt über die Stützstruktur, beispielsweise in Form einer Verstrebung, miteinander verbunden. Bei einer Anordnung mit vier Antriebsmittelträgerelementen pro Trägerelementgruppe kann dies vorteilhafterweise durch eine X-förmige Querverstrebung erfolgen. Diese Verstrebung, die integraler Bestandteil der Stützstruktur ist, sorgt für eine besonders effektive Verteilung der Lasten und erhöht die strukturelle Integrität der gesamten Antriebsanordnung.

In einer bevorzugten Ausführungsform sind die Ankerelemente der Antriebsmittelträgerelemente innerhalb der ersten und/oder zweiten Trägerelementgruppe um die Luftschiffhülle im Wesentlichen geometrisch gleichmäßig verteilt angeordnet. Im Sinne der vorliegenden Erfindung bedeutet "im Wesentlichen geometrisch gleichmäßig verteilt", dass jedes Antriebsmittelträgerelement innerhalb eines Bereiches von +/- (plus/minus) 25°, bevorzugter von +/- 15°, des Schnittwinkels in einer geometrisch gleichmäßigen Verteilung der Ankerelemente angeordnet ist.

Ein Schnittwinkel im Sinne der vorliegenden Erfindung bezeichnet den Winkel, der in einer Ebene senkrecht zur Längsachse des Luftschiffes zwischen zwei benachbarten Ankerelementen und der Längsachse gebildet wird, bevorzugt bestimmt ausgehend vom Schnittpunkt der Ankerachse mit der Luftschiffhülle. Dieser Winkel ist bei einer geometrisch gleichmäßigen Verteilung aller Ankerelemente innerhalb einer Trägerelementgruppe gleich groß. Dabei ist bei einer geometrisch gleichmäßigen Verteilung bei 3 Antriebsmittelträgerelementen ein Schnittwinkel von 120°, bei 4 Antriebsmittelträgerelemente beträgt der Schnittwinkel 90°, bei 5 Antriebsmittelträgerelemente beträgt der Schnittwinkel 72°, bei 6 Antriebsmittelträgerelemente beträgt der Schnittwinkel 60°.

Diese Anordnung stellt sicher, dass die Antriebsmittelträgerelemente möglichst gleichmäßig um die Luftschiffhülle angeordnet sind, um einen optimalen Schubvektor in alle Richtungen zu gewährleisten. Die zulässige Abweichung von +/- 25° bevorzugter von +/- 15°, ermöglicht eine gewisse Flexibilität bei der Anordnung, um bauliche oder aerodynamische Anforderungen zu berücksichtigen, ohne die wesentliche Gleichmäßigkeit der Verteilung zu beeinträchtigen. Dies kann insbesondere für die Landefähigkeit, Anordnung von Kabinen oder anderen Baulichen Elementen notwendig sein.

Die geometrisch gleichmäßige Verteilung der Ankerelemente sorgt für eine ausgeglichene und effektive Schubverteilung, wodurch das Luftschiff präzise in sechs Freiheitsgraden manövriert werden kann. Dabei wird ein größtmöglicher Gesamtschub in allen 6 Freiheitsgraden angestrebt, würden die Antriebsmittelträgerelemente beispielsweise ausschließlich auf Unterseite des Luftschiffes angeordnet werden, wäre ein Nicken, also eine Bewegung im fünften Freiheitsgrad, nicht erfindungsgemäß durchführbar.

In einigen bevorzugten Ausführungsformen sind zumindest jeweils zwei, bevorzugt alle, Antriebsmittelträgerelemente innerhalb einer Trägerelementgruppe auf einer Ebene, die orthogonal zur Längsachse des Luftschiffes steht, angeordnet. Dies ermöglicht ein vereinfachtes Ansteuern der Antriebsmittel, da diese symmetrisch zur Längsachse angeordnet sind, die die bevorzugte Referenzachse für die Bewegung des Luftschiffes in sechs Freiheitsgraden ist und die Antriebsmittel so einen gleichen Anteil am Gesamtschub haben können.

In einigen bevorzugten Ausführungsformen sind dabei die Antriebsmittelträgerelemente in einer ersten Trägerelementgruppe angeordnet, die bevorzugt in der vorderen Hälfte, bevorzugter im vorderen Drittel des Luftschiffes angeordnet ist, und einer zweiten Trägerelementgruppe, die bevorzugt in der hinteren Hälfte, bevorzugter im hinteren Drittel des Luftschiffes angeordnet ist. Der Abstand zwischen der ersten und zweiten Trägerelementgruppe ist für ein effektives Manövrieren von entscheidender Bedeutung, da er die Hebelwirkung und die Stabilität des Schubs in den sechs Freiheitsgraden beeinflusst. Ein größerer Abstand ermöglicht eine feinere Kontrolle der Drehmomente um die Quer-, Längs- und Hochachse des Luftschiffes, was insbesondere bei komplexen Manövern wie Drehen, Kippen oder Schwenken von Vorteil ist. Gleichzeitig trägt dieser Abstand zur verbesserten Verteilung der Schubkräfte entlang der Längsachse bei, wodurch die strukturelle Integrität der Luftschiffhülle erhalten bleibt und die Effizienz des Antriebssystems gesteigert wird.

In einigen besonders bevorzugten Ausführungsformen wird der Abstand zwischen der ersten und zweiten Trägerelementgruppe so gewählt, dass er in etwa 1/3 bis 7/8 der Gesamtlänge des Luftschiffes entspricht, um eine optimale Balance zwischen Manövrierfähigkeit und struktureller Stabilität zu gewährleisten.

In einer bevorzugten Ausführungsform beträgt die Anzahl der Antriebsmittel acht, wobei jeweils ein Antriebsmittel an einem Antriebsmittelträgerelement angeordnet ist. Die Antriebsmittelträgerelemente sind dabei so verteilt, dass jeweils vier in der ersten Trägerelementgruppe und vier in der zweiten Trägerelementgruppe angeordnet sind.

Durch diese Anordnung wird eine symmetrische Verteilung der Antriebsmittel um die Luftschiffhülle gewährleistet, was zu einer gleichmäßigen Verteilung der Schubkräfte führt. Dies ermöglicht eine präzise Steuerung des Luftschiffes in allen Bewegungsrichtungen und sorgt gleichzeitig für eine verbesserte Stabilität bei komplexen Manövern.

In einer weiteren Ausgestaltung können die Trägerelementgruppen so angeordnet sein, dass die Antriebsmittelträgerelemente der ersten Trägerelementgruppe in Bezug auf die der zweiten Trägerelementgruppe verdreht positioniert sind. Eine solche Verdrehung kann dazu beitragen, Turbulenzen zu minimieren und die Effizienz der Antriebsmittel zu steigern, indem die Strömungsinterferenzen zwischen den vorderen und hinteren Antriebsmitteln reduziert werden. Alternativ können die Trägerelementgruppen in einer symmetrischen Anordnung angeordnet sein, um eine optimale Balance und eine maximale Stabilität der Antriebsanordnung zu erzielen.

Bevorzugt bezeichnet der Begriff "verdreht" in Ausgestaltungen, bei denen beide Trägerelementgruppen die gleiche Anzahl an Antriebsmittelträgerelementen umfassen, dass die Antriebsmittelträgerelemente der zweiten Trägerelementgruppe um die Hälfte des Schnittwinkels der geometrischen Verteilung verdreht angeordnet werden. Bei 4 Antriebsmittelträgerelementen in der ersten Trägerelementgruppe wäre der Schnittwinkel 90° und die zweite Trägerelementgruppe somit um 45° um die Längsachse gedreht zur ersten Trägerelementgruppe angeordnet. Dadurch werden die Antriebsmittel "auf Lücke" angeordnet, was eine optimale Verteilung und verringerte Verwirbelungen ermöglicht.

In einer bevorzugten Ausführungsform sind zumindest jeweils zwei, bevorzugt alle, Antriebsmittelträgerelemente innerhalb einer Trägerelementgruppe auf einer Ebene angeordnet, die orthogonal zur Längsachse des Luftschiffes steht. Diese Anordnung sorgt für eine gleichmäßige Verteilung der Antriebsmittel in einer Ebene, was die Stabilität und die Effizienz der erzeugten Schubkräfte verbessert. Durch die Ausrichtung der Antriebsmittelträgerelemente auf einer gemeinsamen Ebene wird zudem die aerodynamische Balance des Luftschiffes optimiert, da Turbulenzen entlang der Längsachse minimiert und symmetrische Schubvektoren erzeugt werden.

In einer bevorzugten Ausführungsform sind acht Antriebsmittel in einer ersten Gruppe und einer zweiten Gruppe angeordnet, wobei jede Gruppe zwischen drei und zehn Antriebsmittel umfasst, wobei bevorzugt ein oder zwei Antriebsmittel an jedem Antriebsmittelträgerelement angeordnet ist. Die erste Gruppe ist dabei im vorderen Drittel des Luftschiffes angeordnet, während die zweite Gruppe im hinteren Drittel des Luftschiffes positioniert ist. Die erste Gruppe der Antriebsmittel ist dabei auf Antriebsmittelträgerelementen der ersten Trägerelementgruppe angeordnet, die zweite Gruppe der Antriebsmittel auf Antriebsmittelträgerelementen der zweiten Trägerelementgruppe. Diese Verteilung der Antriebsmittel in zwei Gruppen ermöglicht eine optimale Balance zwischen Stabilität und Manövrierfähigkeit. Die Platzierung im vorderen und hinteren Drittel des Luftschiffes sorgt dafür, dass die Schubkräfte effizient entlang der Längsachse verteilt werden, wodurch eine präzise Steuerung und eine hohe Stabilität bei allen Manövern gewährleistet sind. Zudem bietet die flexible Gruppengröße von drei bis zehn Antriebsmitteln je Gruppe die Möglichkeit, die Konfiguration an spezifische Anforderungen, wie Nutzlast oder aerodynamische Gegebenheiten, anzupassen.

In einer weiteren Ausgestaltung können die Ebenen der beiden Trägerelementgruppen parallel zueinander angeordnet sein, um eine optimale Kraftverteilung und strukturelle Stabilität zu gewährleisten. Alternativ bevorzugt können die Ebenen leicht geneigt zueinander positioniert werden, um spezifische aerodynamische Vorteile zu erzielen, beispielsweise eine verbesserte Manövrierfähigkeit oder eine reduzierte Strömungsinterferenz zwischen den Trägerelementgruppen.

In einigen bevorzugten Ausführungsformen ist an jedem Antriebsmittelträgerelement ein Antriebsmittel angeordnet, wobei das Antriebsmittel beabstandet zur Luftschiffhülle angeordnet ist. Die Beabstandung sorgt für eine optimale Anströmung des Antriebsmittels und minimiert Interferenzen mit der Luftströmung um das Luftschiff. Das Antriebsmittelträgerelement ist seinerseits an einem Ankerelement befestigt, welches an der Luftschiffhülle angebracht ist und eine Ankerachse aufweist.

In einer bevorzugten Ausführungsform weist ein beabstandetes Antriebsmittel mindestens einen Abstand des 1,25-fachen, bevorzugt des 1,5-fachen, am bevorzugtesten des 2,0-fachen, des Antriebsradius von der Luftschiffhülle auf. Besonders bevorzugt liegt der Bereich der Beabstandung zwischen 1,25-fachen und 10-fachen des Antriebsradius, besonders bevorzugt dem 1,5-fachen bis 6-fachen des Antriebsradius. Dieser Abstand umfasst insbesondere den Abstand der Antriebsachse zur Ankerachse im Sinne der vorliegenden Erfindung. Die Ankerachse wird dabei definiert als eine Gerade, die durch den Punkt des Ankerelements oder des Antriebsmittels an der Luftschiffhülle verläuft, welcher am weitesten von der Längsachse des Luftschiffes entfernt ist. Da die Ankerachse zugleich den Punkt mit dem geringsten Abstand zur Luftschiffhülle unabhängig von der Ausrichtung des Antriebsmittels am Antriebsmittelträger darstellt, ergibt sich eine konsistente Referenz für die Positionierung des Antriebsmittels. Diese Beabstandung trägt dazu bei, den Einfluss von Luftverwirbelungen und Interferenzen zwischen der Luftströmung entlang der Luftschiffhülle und den Antriebsmitteln zu minimieren. Dadurch wird die aerodynamische Effizienz gesteigert und der Wirkungsgrad des Antriebssystems verbessert. Zudem wird durch den definierten Mindestabstand die Gefahr von mechanischen Schäden oder Beeinträchtigungen der Stabilität durch Turbulenzen oder Strömungsabrisse reduziert, was die Zuverlässigkeit und Langlebigkeit der Anordnung erhöht.

Die vorliegende Erfindung betrifft eine Luftschiffantriebsmittelanordnung, die dazu eingerichtet ist, ein Luftschiff direkt in sechs Freiheitsgraden zu manövrieren und anzutreiben. Unter "sechs Freiheitsgraden" im Sinne der vorliegenden Erfindung werden Vorwärts-/Rückwärtsbewegung, Seitwärtsbewegung, Aufwärts-/Abwärtsbewegung sowie Gieren, Nicken und Rollen des Luftschiffs verstanden. Besonders bevorzugt können alle Freiheitsgrade direkt angesteuert werden, also durch direkte Änderung des Schubvektors der Antriebe.

Ein "Schubvektor" im Sinne der vorliegenden Erfindung bezeichnet die gerichtete Kraft, die von einem Antriebsmittel erzeugt wird und entlang der Antriebsachse wirkt. Der Schubvektor ist somit parallel oder gleich der Antriebsachse ausgerichtet. Er repräsentiert sowohl die Richtung als auch die Größe der von einem einzelnen Antriebsmittel erzeugten Schubkraft.

Die Summe der einzelnen Schubvektoren aller Antriebsmittel ergibt den Gesamtschubvektor des Luftschiffs. Dieser Gesamtschubvektor bestimmt die resultierende Bewegung des Luftschiffs in den drei räumlichen Dimensionen sowie seine Rotationen um die entsprechenden Achsen.

Bei Antriebsmitteln, die auf Antriebsmittelträgern angeordnet sind, die mit einem Aktuator ausgestattet sind, der ausschließlich für eine Rotationsbewegung entlang der Antriebsachse ausgelegt ist, kann der Schubvektor des Antriebsmittels nur innerhalb der Rotationsebene dieser Achse verändert werden. Dies gilt, sofern kein zusätzlicher Aktuator im Antriebsmittel vorhanden ist, der eine zusätzliche Schwenkbewegung ermöglicht.

Innerhalb einer Rotationsbewegung von 0 bis +/- 180° ist es möglich, den Schubvektor effektiv in jede beliebige Richtung innerhalb der Rotationsebene zu steuern. Diese Anordnung ermöglicht eine schnelle Anpassung des Schubvektors und ist besonders vorteilhaft für dynamische Steuerungsanforderungen.

Wenn der Aktuator auf Rotationsbewegung auf einen Bereich von 0 bis +/- 90° eingerichtet ist, kann der Schubvektor durch Schubumkehr (Inversion des Schubvektors) ebenfalls vollständig innerhalb der Rotationsebene angesteuert werden. Diese Einschränkung reduziert die Anforderungen an den Aktuator, da weniger Rotationsweg benötigt wird. Allerdings kann die starke Veränderung des Schubes, die für die Inversion erforderlich ist, zu einer etwas langsameren Richtungsänderung führen.

Durch die unabhängige Steuerung der einzelnen Antriebsmittel können die Schubvektoren so angepasst werden, dass der Gesamtschubvektor gezielt in eine gewünschte Richtung weist. Dies ermöglicht es, das Luftschiff in allen sechs Freiheitsgraden zu manövrieren.

Der erste Freiheitsgrad im Sinne der vorliegenden Erfindung ist dabei die Vorwärts-/Rückwärtsbewegung (engl. surge) entlang der Längsachse des Luftschiffes. Der zweite Freiheitsgrad im Sinne der vorliegenden Erfindung ist dabei die Seitwärtsbewegung (engl. sway) entlang der Querachse des Luftschiffes. Der dritte Freiheitsgrad im Sinne der vorliegenden Erfindung ist dabei die Aufwärts-/Abwärtsbewegung (engl. heave) entlang der Höhenachse bzw. Vertikalachse des Luftschiffes. Der vierte Freiheitsgrad im Sinne der vorliegenden Erfindung ist dabei das Gieren (engl. yaw) um die Höhenachse bzw. Vertikalachse des Luftschiffes. Der fünfte Freiheitsgrad im Sinne der vorliegenden Erfindung ist dabei das Nicken (engl. pitch) um die Querachse des Luftschiffes. Der sechste Freiheitsgrad im Sinne der vorliegenden Erfindung ist dabei das Rollen (engl. roll) um die Längsachse des Luftschiffes.

Indem die Schubvektoren der einzelnen Antriebsmittel so ausgerichtet werden, dass ihre Summe den Gesamtschubvektor in die Richtung des gewünschten Freiheitsgrades lenkt, kann das Luftschiff effizient und präzise gesteuert werden. Dies ist insbesondere wichtig für komplexe Manöver, bei denen Bewegungen in mehreren Freiheitsgraden gleichzeitig erforderlich sind, oder bei Aufgaben, in denen präzise Positionierung des Luftschiffes erforderlich ist. Dies kann zum Beispiel bei schnell wechselnden Windrichtungen und beim zielgerichteten Landen und Starten des Luftschiffes vorteilhaft sein.

Die Möglichkeit, jeden Schubvektor individuell zu kontrollieren, erlaubt es, schnelle Richtungsänderungen vorzunehmen und die Stabilität und Positionierung des Luftschiffs unter verschiedenen Flugbedingungen sowie Start und/oder Landevorgang zu gewährleisten. Somit trägt die gezielte Ausrichtung der Schubvektoren wesentlich zur Leistungsfähigkeit und Flexibilität des erfindungsgemäßen Antriebssystems bei.

In einer bevorzugten Ausführungsform ist die Antriebsachse zwischen 0° und +/- 180°, bevorzugter zwischen 0° und +/- 90°, am bevorzugtesten zwischen 0° und +/- 45° relativ zur Ankerachse schwenkbar. Diese Schwenkbarkeit ermöglicht eine flexible Ausrichtung der Antriebsmittel, wodurch der Schubvektor gezielt angepasst werden kann, um eine präzise Steuerung des Luftschiffes in allen Bewegungsrichtungen zu gewährleisten. Die Fähigkeit, die Antriebsachse in einem solch weiten Bereich zu schwenken, erlaubt es, sowohl horizontale als auch vertikale Manöver effektiv auszuführen. Dies ist besonders vorteilhaft bei komplexen Flugbewegungen wie Drehen, Kippen oder der Stabilisierung des Luftschiffes in turbulenten Umgebungen.

In einer bevorzugten Ausführungsform beträgt der Schwenkwinkel zwischen 0° und +/- 90°, wobei die Antriebsmittel unabhängig voneinander gesteuert werden können, wodurch durch Umkehrschub effektiv eine Abdeckung aller Schubvektoren gewährleistet werden kann. Hierbei wird so die strukturelle Belastung der Antriebsmittelträgerelemente und Anforderungen an den Arbeitsbereich der Aktuatoren reduziert, ohne die Manövrierfähigkeit einzuschränken.

In einer weiteren Ausgestaltung können die Schwenkwinkel der Antriebsachse individuell für jedes Antriebsmittel eingestellt werden, um spezifische Flugbedingungen oder Manöver zu unterstützen. Beispielsweise kann durch unterschiedliche Schwenkwinkel ein Drehmoment um die Längs-, Quer- oder Hochachse des Luftschiffes erzeugt werden, was die Vielseitigkeit und Präzision der Steuerung erheblich verbessert.

Weiterhin betrifft die Erfindung ein Verfahren zum Steuern eines Luftschiffes, das eine Luftschiffantriebsmittelanordnung im Sinne der vorliegenden Erfindung aufweist. Das Verfahren umfasst die folgenden Schritte:
a) Registrierung einer Richtungsanweisung, vorzugsweise ausgewählt aus der Liste Halten einer Position, Änderung der Position in Richtung zumindest einer der sechs Freiheitsgrade, Änderung der Geschwindigkeit in zumindest einem der sechs Freiheitsgrade, Einleiten eines komplexen Flugmanövers mit einer Sequenz der vorgenannten Anweisungen, vorzugsweise in Form eines digitalen Signals, das von einer Steuervorrichtung oder einer Steuerungsrecheneinheit ausgegeben wird, dann
b) Rotieren zumindest eines Antriebsmittels und Ändern des Schubvektors dieses Antriebsmittels entsprechend der registrierten Richtungsanweisung, dann
c) Anpassung des Schubs dieses zumindest einen Antriebsmittels, um die gewünschte Bewegung des Luftschiffes zu erreichen, dann
d) Messung der durchgeführten Richtungsänderung, mithilfe zumindest eines Sensors, um die Bewegung zu überwachen und gegebenenfalls weitere Anpassungen vorzunehmen.

Dieses Verfahren ermöglicht eine präzise Steuerung des Luftschiffes in allen sechs Freiheitsgraden. Durch die Kombination aus digitaler Steuerung und direkter Anpassung des Schubvektors jedes Antriebsmittels wird eine hochdynamische und effiziente Bewegungssteuerung realisiert. Die Messung der Richtungsänderung durch Sensoren gewährleistet zudem eine kontinuierliche Überwachung und Rückkopplung, wodurch das Luftschiff stabilisiert und die gewünschte Flugbahn oder Position exakt eingehalten werden kann.

In einer bevorzugten Ausgestaltung kann das Verfahren durch zusätzliche Schritte ergänzt werden, wie beispielsweise die Synchronisation mehrerer Antriebsmittel zur Erzeugung kombinierter Schubvektoren oder die automatische Kompensation von äußeren Einflüssen wie Wind oder Turbulenzen. Diese Erweiterungen tragen dazu bei, die Steuerungsgenauigkeit und die Effizienz des Luftschiffes weiter zu steigern.

Dabei umfasst Registrierung einer Richtungsanweisung im Sinne der vorliegenden Erfindung direkte und unmittelbare Richtungsanweisungen oder geplante, gespeicherte Richtungsanweisungen. Dieser Schritt erfolgt in der Steuerungszentrale des Luftschiffes, die typischerweise mit einer Steuervorrichtung oder einer Steuerungsrecheneinheit ausgestattet ist. In einigen Ausführungsformen kann die Richtungsanweisung von einem menschlichen Piloten über ein Steuerpult eingegeben werden, z. B. durch Steuerknüppel, Joysticks oder digitale Eingabegeräte. In anderen Ausführungsformen kann dies durch ein autonomes oder ferngesteuertes System, das Flugrouten vorgibt, erfolgen. Die Eingabe wird in ein digitales Signal umgewandelt, das die gewünschte Richtung oder Bewegung in den sechs Freiheitsgraden beschreibt (z. B. Vorwärts-, Seitwärts- oder Rotationsbewegung). Diese Verarbeitung erfolgt in einem zentralen Flugsteuerungssystem, zum Beispiel ausgeführt auf der Steuerungsrecheneinheit, das mit Echtzeit-Software zur Flugbahnberechnung ausgestattet ist.

Im Sinne der vorliegenden Erfindung werden unter Richtungsanweisungen besonders bevorzugt die Anweisungen aus der Liste bestehend aus oder umfassend: Halten einer Position; Änderung der Position in Richtung zumindest einer der sechs Freiheitsgrade; Änderung der Geschwindigkeit in zumindest einem der sechs Freiheitsgrade; Einleiten eines komplexen Flugmanövers mit einer Sequenz der vorgenannten Anweisungen.

In einigen bevorzugten Ausführungsformen kann eine Richtungsanweisung auch das Halten einer bestimmten Position umfassen, beispielsweise unter windigen Bedingungen. In diesem Fall gibt die Steuervorrichtung oder die Steuerungsrecheneinheit keine Bewegung in eine Richtung vor, sondern steuert die Antriebsmittel so, dass die Position des Luftschiffes stabil gehalten wird. Hierbei arbeiten die Antriebsmittel aktiv gegen äußere Einflüsse wie Wind oder Turbulenzen, indem sie individuell rotieren, schwenken und ihre Schubkräfte anpassen. Die Sensoren, insbesondere Gyroskope, Beschleunigungsmesser und/oder Sensoren, Drucksensoren, GNSS-Systemen und GPS-Systemen, überwachen kontinuierlich die Position und Ausrichtung des Luftschiffes. Diese Daten werden in Echtzeit in der Steuerungsrecheneinheit verarbeitet, um präzise Steuerungsbefehle an die Aktuatoren und das Triebwerksmanagementsystem zu senden. Diese Funktion ist besonders vorteilhaft bei Anwendungen, die eine präzise Positionierung erfordern, wie etwa bei Luftschiffen, die als Plattformen für wissenschaftliche Messungen, Überwachung oder Transport eingesetzt werden.

Die Messung der Richtungsänderung durch Sensoren wird durch ein Netzwerk von Sensoren durchgeführt, die strategisch auf dem Luftschiff, bevorzugt der Luftschiffhülle, angeordnet sind. Diese können jedoch bevorzugt auch an den Antriebsmittelträgerelementen angeordnet sein. Bevorzugt werden Sensoren ausgewählt aus der Liste umfassend oder bestehend aus Gyroskopen, Beschleunigungsmesser und/oder Sensoren, GNSS-Systeme, GPS-Systeme und Drucksensoren, die Bewegungs- und Umgebungsdaten erfassen. Die Daten dieser Sensoren werden an die Steuerungsrecheneinheit gesendet, die die tatsächliche Bewegung des Luftschiffes mit der gewünschten Richtungsanweisung vergleicht. Diese Rückkopplung ermöglicht es, Korrekturen in Echtzeit vorzunehmen und eine stabile Flugbahn aufrechtzuerhalten. Die Sensoren sind oft an den tragenden Strukturen, in den Trägerelementgruppen oder direkt an der Hülle angebracht, um genaue Messungen zu gewährleisten.

Das Rotieren zumindest eines Antriebsmittels und Ändern des Schubvektors wird durch die Aktuatoren an den Antriebsmittelträgerelementen ausgeführt. Die Steuerungseinheit sendet Signale an die Aktuatoren, welche die Antriebsmittel so schwenken oder rotieren, dass der Schubvektor entsprechend der Richtungsanweisung verändert wird. Diese Aktuatoren können elektrische, mechanische, pneumatische, magnetische Aktuator, oder einer Kombination daraus sein, besonders bevorzugt elektromagnetischen Drehgelenke, pneumatischen Stellzylinder, Kardan oder Gelenkmechanismen, hydraulische Zylinder, Schrittmotoren, und Servo-Motoren, die an den Antriebsmittelträgerelementen angeordnet sind. Die Änderungen erfolgen direkt an den Positionen der Antriebsmittel um die Luftschiffhülle, vorzugsweise an den Trägerelementgruppen im vorderen und hinteren Bereich des Luftschiffes.

Die Anpassung des Schubs erfolgt durch das Triebwerksmanagementsystem, beispielsweise auf der Steuerungsrecheneinheit ausgeführt, dass die Leistungsabgabe der Antriebsmittel reguliert. Diese Anpassung kann durch Modulation der Motordrehzahl, des Kraftstoffdurchsatzes oder der Stromversorgung bei elektrischen Antrieben erfolgen. Dieses System ist mit der Energieversorgungseinheit des Luftschiffes und/oder der Antriebsmittel, wie der Antriebsquelle, verbunden, beispielsweise in Maschinenräumen oder zentralen Steuerungseinheiten. Der Schub wird individuell für jedes Antriebsmittel angepasst, um eine genaue Steuerung der Bewegung oder Stabilisierung zu ermöglichen.

### AUSFÜHRUNGSBEISPIELE

Anhand folgender Figuren und Ausführungsbeispiele wird die vorliegende Erfindung näher erläutert, ohne die Erfindung auf diese zu beschränken.

Dabei zeigt
- **Fig. 1:**: zeigt eine schematische Darstellung eines exemplarischen Luftschiffes (1.0) mit Luftschiffantriebsmittelanordnung, bestehend aus 8 Antriebsmitteln (3.0).
- **Fig. 2:**: zeigt schematische Darstellungen zwei verschiedener Antriebsmittel (3.0), angeordnet an das Antriebsmittelträgerelement (4.0).
- **Fig. 3:**: zeigt eine schematische Darstellung eines Luftschiffes (1.0) mit Luftschiffantriebsmittelanordnung, wobei die sechs Freiheitsgrade (2.1, 2.2, 2.3, 2.4, 2.5, 2.6) visuell dargestellt sind.
- **Fig. 4:**: zeigt verschiedene schematische Darstellungen von erfindungsgemäßen Luftschiffantriebsmittelanordnungen in einer Trägerelementgruppe (4.1, 4.2), wobei 3 bis 6 Antriebsmittel (3.0) auf jeweils einem Antriebsmittelträgerelementen (4.0)

In den verschiedenen Abbildungen sind hinsichtlich ihrer Funktion gleichwertige Teile immer mit den gleichen Bezugszeichen versehen, wobei aus Gründen der Übersichtlichkeit nicht alle gleichwertigen Teile gekennzeichnet sind, insbesondere wenn sie in mehrfacher Form auftreten. Nachfolgend wird die vorliegende Erfindung anhand von Ausführungsbeispielen unter Bezugnahme auf die beiliegenden Zeichnungen näher beschrieben. Diese erläutern die vorliegende Erfindung näher, ohne die Erfindung auf diese zu beschränken. Insbesondere sind in den einzelnen Figuren gezeigte und zu dem jeweiligen Beispiel beschriebene Merkmale nicht auf das jeweilige Einzelbeispiel beschränkt. Dabei zeigen:

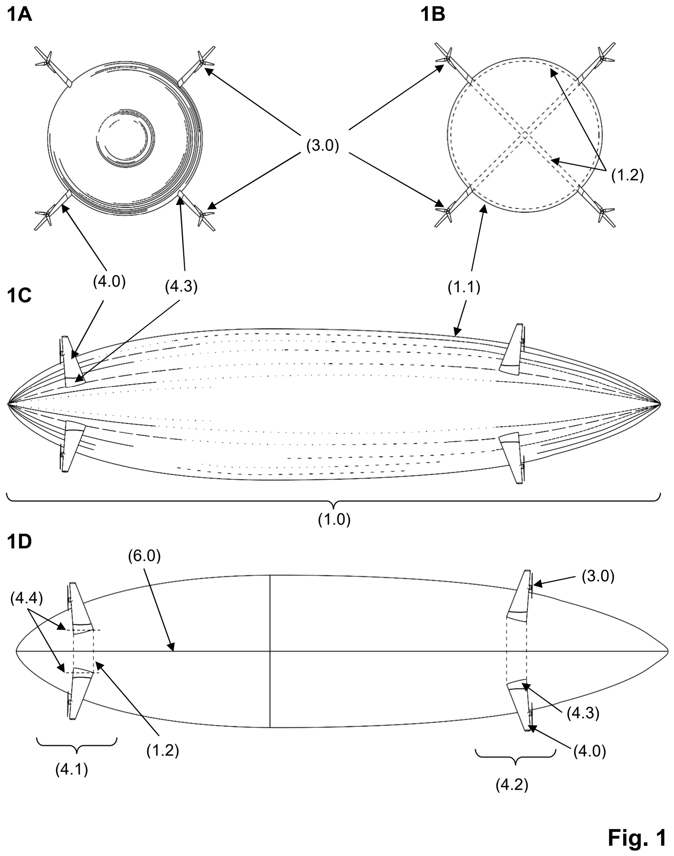

Die in Fig. 1 dargestellte Ausführungsform zeigt ein Luftschiff (1.0) im Sinne der vorliegenden Erfindung, exemplarisch mit einer halbtropfenförmigen Heckpartie und einer weniger spitz zulaufenden Vorderseite.

Fig. 1A zeigt eine Frontansicht des Luftschiffes (1.0), während in Fig. 1B ein Querschnitt durch das Luftschiff (1.0) dargestellt ist. Fig. 1C zeigt das Luftschiff in einer seitlichen Ansicht in Draufsicht, und Fig. 1D stellt eine seitliche Ansicht des Luftschiffes in Durchsicht dar, wodurch die interne Struktur und Anordnung der Komponenten erkennbar wird. Das in den Figuren gezeigte Luftschiff (1.0) verfügt über eine Luftschiffhülle (1.1), auf der acht Ankerelemente (4.3) angeordnet sind. In dieser Ausführungsform sind die Ankerelemente (4.3) als distale Teile einer Stützstruktur (1.2) ausgeführt, die in Form einer X-förmigen Verstrebung dargestellt ist. Die Stützstruktur (1.2) mündet direkt in die Antriebsmittelträgerelemente (4.0), welche die Antriebsmittel (3.0) tragen.

Die Ausführungsform zeigt acht Antriebsmittel (3.0), die jeweils an einem Antriebsmittelträgerelement (4.0) befestigt sind. Diese Antriebsmittelträgerelemente sind in zwei Gruppen angeordnet: einer ersten Trägerelementgruppe (4.1), die sich im vorderen Drittel des Luftschiffes (1.0) befindet, und einer zweiten Trägerelementgruppe (4.2), die im hinteren Drittel des Luftschiffes (1.0) angeordnet ist. Innerhalb jeder Trägergruppe sind die Antriebsmittelträgerelemente (4.0) gleichmäßig um die Luftschiffhülle (1.1) verteilt. Dabei liegen die Schnittpunkte der Ankerachsen (4.4) mit der Luftschiffhülle (1.1) auf einer Ebene, die orthogonal zur Längsachse (6.0) des Luftschiffes (1.0) ausgerichtet ist (Fig. 1D). Die Ankerachsen (4.4) verlaufen parallel zur Längsachse (6.0), wodurch eine symmetrische und stabile Schubverteilung sichergestellt wird. Diese Figuren illustrieren die wesentlichen Merkmale der Erfindung, insbesondere die Anordnung der Antriebsmittel (3.0) und Antriebsmittelträgerelemente (4.0), die Verteilung der Trägergruppen (4.1, 4.2) und die strukturelle Integration durch die Stützstruktur (1.2).

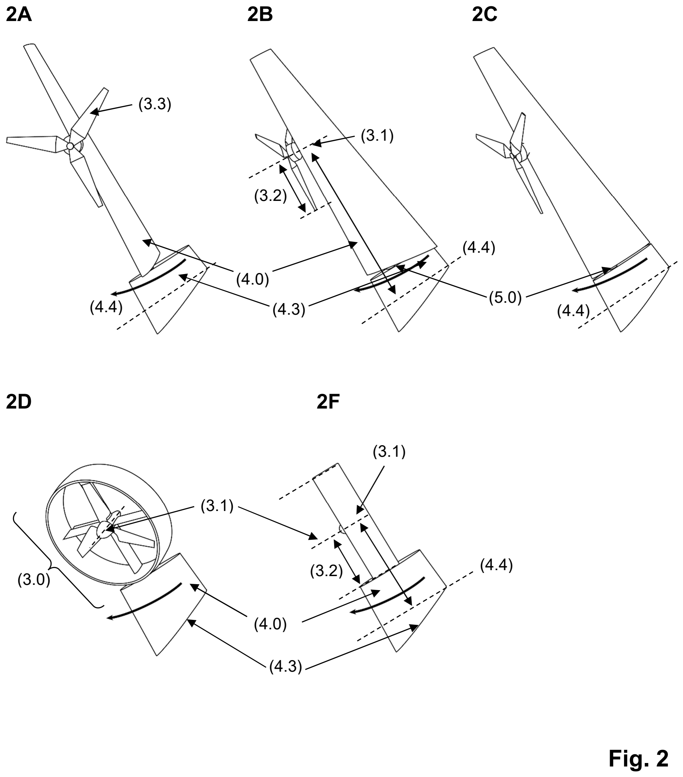

In Fig 2 sind zwei verschiedene Ausgestaltungsformen von Antriebsmitteln (3.0) in unterschiedlichen Schwenkungswinkeln gezeigt. Dabei ist in Fig. 2A ein Antriebsmittel in Form eines Propellers (3.3) ausgestaltet, hier in einer zum Betrachtungspunkt geneigten Ausrichtung des Antriebsmittelträgerelementes (4.0). Dieses weist ein Ankerelement auf, das eine Ankerachse (4.4) aufweist, die hier parallel zur Längsachse des Luftschiffes (hier nicht dargestellt) ausgerichtet ist. Dabei ist das Ankerelement (4.3) hier die Fläche unter dem Ankermittelträgerelement (4.0), wobei hierbei nur die äußere Konturlinie, die mit der Außenhülle des Luftschiffes gebildet wird, gezeigt ist. In Fig. 2B ist das Antriebsmittel in die andere Richtung (vom Betrachter zeigend) dargestellt. Der Winkel zwischen Antriebsachse (3.1) und der Ankerachse (4.4) beträgt hierbei ca. 20°. Die Rotorblattlänge, also der Rotorradius, entspricht dabei in diesem Fall dem Antriebsradius (3.2). Die Beabstandung zwischen Antriebsmittel, insbesondere der Antriebsachse (3.1) und der Ankerachse (4.4) beträgt hierbei ca. dem dreifachen (3x) des Antriebsradius (3.2). Fig 2C zeigt die Anordnung in Neutralposition, wobei der Winkel zwischen Antriebsachse (3.1) und der Ankerachse 0° beträgt.

In **Fig. 2D** ist eine weitere Anordnung mit einem weiteren erfindungsgemäßen Antriebsmittel (3.0) dargestellt, das in einer frontal geneigten Ausrichtung dargestellt ist. **Fig. 2F** zeigt das gleiche Antriebsmittel (3.0) in einer Seitenansicht, die parallel zur Antriebsachse (3.1) ausgerichtet ist. Hierbei beträgt die Beabstandung zwischen dem Antriebsmittel (3.0), genauer zwischen der Antriebsachse (3.1) und der Ankerachse (4.4), etwa das 2-fache des Antriebsradius (3.2). Diese Anordnung illustriert die räumliche Beziehung zwischen den Komponenten und verdeutlicht die Flexibilität bei der Ausrichtung und Positionierung des Antriebsmittels, um optimale Schubvektoren zu gewährleisten.

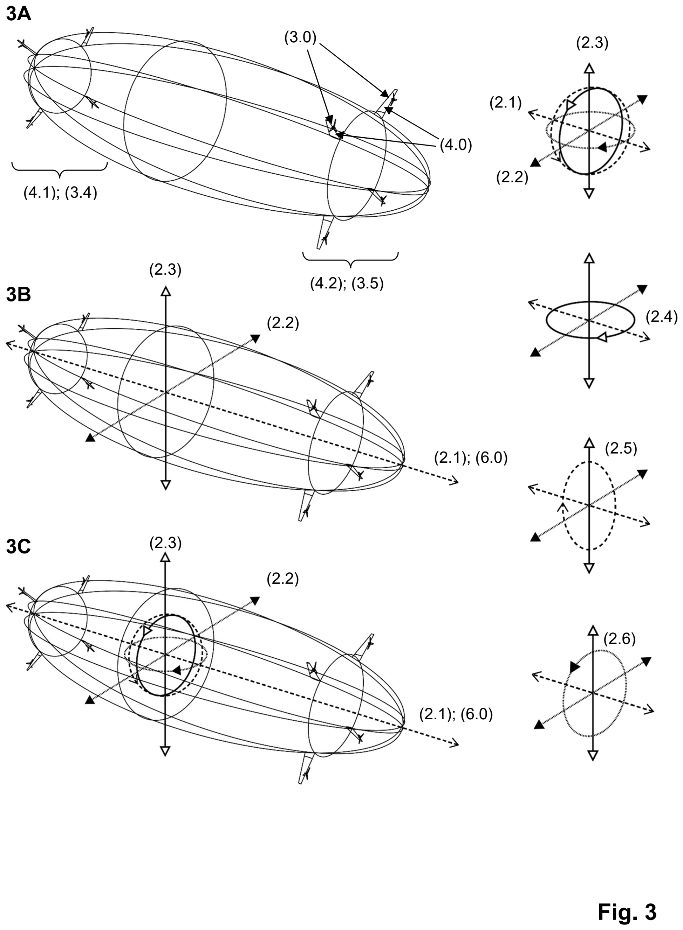

In Fig. 3 ist eine weitere Ausgestaltungsform des erfindungsgemäßen Luftschiffes (1.0) aus einer seitlichen Perspektive dargestellt. Dabei werden die sechs Freiheitsgrade (2.1 bis 2.6) des Luftschiffes illustriert. Der erste Freiheitsgrad (2.1) beschreibt die Vorwärts- und Rückwärtsbewegung entlang der Längsachse des Luftschiffes, der zweite Freiheitsgrad (2.2) die Seitwärtsbewegung entlang der Querachse, und der dritte Freiheitsgrad (2.3) die Aufwärts- und Abwärtsbewegung entlang der Vertikalachse. Weiterhin sind der vierte Freiheitsgrad (2.4), das Gieren um die Vertikalachse, der fünfte Freiheitsgrad (2.5), das Nicken um die Querachse, sowie der sechste Freiheitsgrad (2.6), das Rollen um die Längsachse, dargestellt. Das in Fig. 3A dargestellte Luftschiff (1.0) weist eine erste Trägerelementgruppe (4.1) auf, die im vorderen Drittel des Luftschiffes angeordnet ist und aus vier geometrisch gleichmäßig verteilten Antriebsmittelträgerelementen besteht, wobei jedes Trägerelement ein Antriebsmittel (3.0) trägt. Diese Antriebsmittel sind in einer ersten Gruppe (3.4) zusammengefasst und nach vorne gerichtet. Im hinteren Drittel des Luftschiffes befindet sich eine zweite Trägerelementgruppe (4.2), die ebenfalls aus vier Antriebsmittelträgerelementen besteht, von denen jedes ein Antriebsmittel (3.0) trägt. Diese Antriebsmittel, die zur zweiten Gruppe (3.5) gehören, sind nach hinten gerichtet. Die Antriebsmittelträgerelemente sind in dieser Ausführungsform als Finnen ausgestaltet, wodurch diese als zusätzlicher Auftrieb und als aerodynamische Elemente und zur Steuerung genutzt werden können. Das Luftschiff (1.0) ist in diesem Beispiel als Rotationsellipsoid mit stromlinienförmiger Außenhülle gestaltet und weist an beiden Enden abgerundete Enden auf, um eine optimale Aerodynamik zu gewährleisten. In Fig. 3B werden die ersten drei Freiheitsgrade (2.1, 2.2, 2.3) gezeigt. Der erste Freiheitsgrad (2.1) verläuft entlang der Längsachse (6.0), der zweite Freiheitsgrad (2.2) entlang der Querachse, und der dritte Freiheitsgrad (2.3) entlang der Vertikalachse. Fig. 3C zeigt die weiteren drei Freiheitsgrade, nämlich das Gieren (2.4) um die Vertikalachse, das Nicken (2.5) um die Querachse und das Rollen (2.6) um die Längsachse.

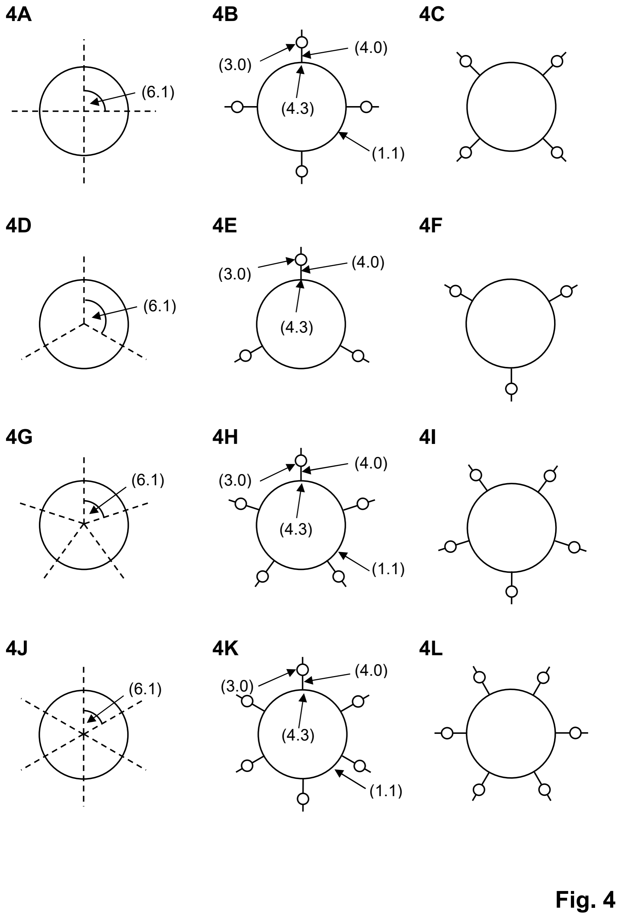

Fig. 4 zeigt verschiedene erfindungsgemäße Luftschiffantriebsanordnungen, wobei jeweils ein Schnitt durch das Luftschiff (1.0) entlang einer Ebene dargestellt ist, auf der die erste Trägerelementgruppe (4.1) oder die zweite Trägerelementgruppe (4.2) angeordnet ist. In den Figuren werden die Schnittwinkel (6.1) veranschaulicht, die bei einer geometrisch gleichmäßigen Verteilung der Antriebsmittelträgerelemente (4.0) gebildet werden. Fig. 4A bis 4C zeigen eine exemplarische Anordnung von vier Antriebsmitteln (3.0), die jeweils an einem Antriebsmittelträgerelement (4.0) befestigt sind. In dieser Anordnung beträgt der Schnittwinkel (6.1) 90°. Die Antriebsmittelträgerelemente (4.0) sind symmetrisch um die Luftschiffhülle (1.1) angeordnet, was eine gleichmäßige Verteilung der Schubvektoren gewährleistet. Fig. 4D bis 4F zeigen Anordnungen mit drei Antriebsmitteln (3.0), wobei der Schnittwinkel (6.1) 120° beträgt. Fig. 4E illustriert eine Anordnung mit einem Antriebsmittelträgerelement (4.0) zentral oben auf der Luftschiffhülle (1.1). In Fig. 4F ist eine alternative Anordnung dargestellt, bei der die Antriebsmittelträgerelemente (4.0) um 60° gedreht angeordnet sind, wodurch unterschiedliche aerodynamische und strukturelle Anforderungen berücksichtigt werden können. Fig. 4G bis 4I zeigen Anordnungen mit fünf Antriebsmitteln (3.0), die jeweils an einem Antriebsmittelträgerelement (4.0) befestigt sind. Der Schnittwinkel (6.1) beträgt in diesen Anordnungen 72°. Diese asymmetrischere Verteilung bietet Vorteile bei spezifischen Anwendungen, bei denen eine unregelmäßige Schubverteilung gewünscht ist. Fig. 4J bis 4L stellen Anordnungen mit sechs Antriebsmitteln (3.0) dar, die ebenfalls jeweils an einem Antriebsmittelträgerelement (4.0) angebracht sind. In dieser Anordnung beträgt der Schnittwinkel (6.1) 60°. Die geometrisch gleichmäßige Verteilung sorgt für eine optimale Stabilität und Schubbalance, insbesondere bei Luftschiffen mit hohen aerodynamischen Anforderungen.

### Beispiel 1: Luftschiff mit Luftschiffantriebsanordnung

Dieses Beispiel beschreibt eine Luftschiffantriebsanordnung mit acht Antriebsmitteln (3.0), die jeweils an einem Antriebsmittelträgerelement (4.0) angeordnet sind. Jeweils vier dieser Antriebsmittelträgerelemente befinden sich in einer ersten Trägerelementgruppe (4.1), die im vorderen Drittel des Luftschiffes (1.0) positioniert ist, und vier in einer zweiten Trägerelementgruppe (4.2), die im hinteren Drittel des Luftschiffes (1.0) angeordnet ist. Das Luftschiff (1.0) weist eine halbstarre Bauweise mit einer Stützstruktur (1.2) auf, in der die Antriebsmittelträgerelemente (4.0) einer Trägerelementgruppe (4.1, 4.2) paarweise über Ankerelemente (4.3) direkt mit einer X-förmigen Verstrebung der Stützstruktur (1.2) verbunden sind. Diese Anordnung gewährleistet die notwendige Stabilität, um das Luftschiff (1.0) präzise in allen sechs Freiheitsgraden (2.1 bis 2.6) zu manövrieren.

Die vier Antriebsmittelträgerelemente (4.0) innerhalb einer Trägerelementgruppe (4.1, 4.2) sind geometrisch gleichmäßig um die Luftschiffhülle (1.1) verteilt. Der Schnittwinkel (6.1) zwischen zwei benachbarten Antriebsmittelträgerelementen (4.0) beträgt 90°, wobei die Winkel ausgehend vom Schnittpunkt der Ankerachse (4.4) mit der Luftschiffhülle (1.1) und in Bezug auf die Längsachse (6.0) bestimmt werden. Die Antriebsachsen (3.1) der Antriebsmittel (3.0) sind um ±45° relativ zur jeweiligen Ankerachse (4.4) rotierbar, was eine flexible Anpassung der Schubvektoren ermöglicht.

### Beispiel 2: Luftschiff mit Luftschiffantriebsanordnung

Dieses Beispiel basiert auf dem Luftschiff (1.0) aus Beispiel 1, wobei die Antriebsachsen (3.1) der Antriebsmittel (3.0) in diesem Fall um ±180° relativ zur Ankerachse (4.4) rotierbar sind. Durch diesen erweiterten Bewegungsradius kann jeder Schubvektor innerhalb der Rotationsebene eines einzelnen Antriebsmittels (3.0) erzeugt werden, ohne dass eine Schubumkehr erforderlich ist. Diese Anordnung ermöglicht schnellere Richtungsänderungen und erhöht die Manövrierfähigkeit des Luftschiffes (1.0) bei bestimmten Flugmanövern.

### Beispiel 3: Steuerung eines Luftschiffes

Tabelle 1 listet exemplarische Parameter für die Antriebsmittel Steueranweisung für ein Luftschiff (1.0) mit einer Antriebsanordnung nach Beispiel 1. Die Antriebsmittel sind hierbei als Propeller ausgestaltet. Die Tabelle beschreibt die Drehrichtungen und Winkelstellungen der Antriebsmittel (3.0), die für verschiedene Bewegungen des Luftschiffes (1.0) in allen sechs Freiheitsgraden (2.1 bis 2.6) erforderlich sind.

In der Spalte "AM" werden die Vorzeichen der Schubvektoren angegeben, wobei ein positives Vorzeichen auf einen Drehrichtung im Uhrzeigersinn (rechtsherum) und ein negatives Vorzeichen auf eine Drehrichtung entgegen dem Uhrzeigersinn (linksherum) hinweist. Die Spalte "AK" gibt die Winkel oder Winkelbereiche der Aktuatoren (5.0) an, die an den Antriebsmittelträgerelementen (4.0) der jeweiligen Antriebsmittel (3.0) angebracht sind. Bewegungen entlang der Längsachse (6.0) (erster Freiheitsgrad, 2.1) werden als "+X" für Vorwärts- und "-X" für Rückwärtsbewegung bezeichnet. Bewegungen entlang der Querachse (zweiter Freiheitsgrad, 2.2) sind mit "+Y" und "-Y" beschrieben, während Bewegungen entlang der Vertikalachse (dritter Freiheitsgrad, 2.3) als "+Z" und "-Z" angegeben sind. Rotationen werden entsprechend als "+/- Gieren" (vierter Freiheitsgrad, 2.4), "+/- Nicken" (fünfter Freiheitsgrad, 2.5) und "+/- Rollen" (sechster Freiheitsgrad, 2.6) dargestellt.

### Beispiel 4: Steuerung ohne Umkehrschub

Dieses Beispiel entspricht dem Luftschiff und Steuerung aus dem Beispiel 3, beschreibt jedoch ein Luftschiff (1.0), dessen Aktuatoren (5.0) einen Bewegungsbereich von +/- 180° ermöglichen. Dadurch können alle erforderlichen Schubvektoren der Antriebsmittel (3.0) erzeugt werden, ohne auf Umkehrschub zurückgreifen zu müssen. Diese Anordnung verbessert die Effizienz und ermöglicht eine präzisere und schnellere Anpassung der Schubvektoren bei komplexen Manövern.

**Tabelle 1: Exemplarische Parameter für Steuerung der Luftschiffantriebsmittelanordnung**

| **Bewegungsrichtung (X,Y,Z)** | **AM** | **AK** | **AM** | **AK** | **AM** | **AK** | **AM** | **AK** | **AM** | **AK** | **AM** | **AK** | **AM** | **AK** | **AM** | **AK** |
|---|---|---|---|---|---|---|---|---|---|---|---|---|---|---|---|---|
| **ID No** | **1** | **1** | **2** | **2** | **3** | **3** | **4** | **4** | **5** | **5** | **6** | **6** | **7** | **7** | **8** | **8** |
| +X Vorwärts | + | 0° | - | 0° | - | 0° | + | 0° | - | 0° | + | 0° | + | 0° | - | 0° |
| -X Rückwärts | - | 0° | + | 0° | + | 0° | - | 0° | + | 0° | - | 0° | - | 0° | + | 0° |
| +Y Rechts | - | -1° bis -45° | - | 1° bis 45° | + | 1° bis 45° | + | -1° bis -45° | - | 1° bis 45° | - | -1 ° bis -45° | + | -1° bis -45° | + | 1° bis 45° |
| -Y Links | + | -1° bis -45° | + | 1° bis 45° | - | 1° bis 45° | - | -1° bis -45° | + | 1° bis 45° | + | -1° bis -45° | - | -1° bis -45° | - | 1° bis 45° |
| -Z Hoch | - | -1° bis -45° | + | 1° bis 45° | - | 1° bis 45° | + | -1° bis -45° | - | 1° bis 45° | + | -1° bis -45° | - | -1° bis -45° | + | 1° bis 45° |
| +Z Runter | + | -1° bis -45° | - | 1° bis 45° | + | 1° bis 45° | - | -1° bis -45° | + | 1° bis 45° | - | -1 ° bis -45° | + | -1° bis -45° | - | 1° bis 45° |
| +Nicken | - | -1° bis -45° | + | 1° bis 45° | - | 1° bis 45° | + | -1° bis -45° | + | 1° bis 45° | - | -1 ° bis -45° | + | -1° bis -45° | - | 1° bis 45° |
| -Nicken | + | -1° bis -45° | - | 1° bis 45° | + | 1° bis 45° | - | -1° bis -45° | - | 1° bis 45° | + | -1° bis -45° | - | -1° bis -45° | + | 1° bis 45° |
| +Rollen | - | 0° bis -45° | - | 1° bis 45° | - | 1° bis 45° | - | -1° bis -45° | + | 1° bis 45° | + | -1° bis -45° | + | -1° bis -45° | + | 1° bis 45° |
| -Rollen | + | 0° bis -45° | + | 1° bis 45° | + | 1° bis 45° | + | -1° bis -45° | - | 1° bis 45° | - | -1 ° bis -45° | - | -1° bis -45° | - | 1° bis 45° |
| -Gieren Links | - | -1° bis -45° | - | 1° bis 45° | + | 1° bis 45° | + | -1° bis -45° | + | 1° bis 45° | + | -1° bis -45° | - | -1° bis -45° | - | 1° bis 45° |
| +Gieren Rechts | + | -1° bis -45° | + | 1° bis 45° | - | 1° bis 45° | - | -1° bis -45° | - | 1° bis 45° | - | -1 ° bis -45° | + | -1° bis -45° | + | 1° bis 45° |
| | | | | | | | | | | | | | | | | |
| +X Vorwärts +Y Rechts | + | 0° | - | 1° bis 45° | - | 0° | + | -1° bis -45° | - | 1° bis 45° | + | 0° | + | -1° bis -45° | - | 0° |
| +X Vorwärts -Y Links | + | -1° bis -45° | - | 0° | - | 1° bis 45° | + | 0° | - | 0° | + | -1 ° bis -45° | + | 0° | - | 1° bis 45° |
| +X Vorwärts -Z Hoch | + | 0° | - | 0° | - | 1° bis 45° | + | -1° bis -45° | - | 1° bis 45° | + | -1° bis -45° | + | 0° | - | 0° |
| +X Vorwärts +Z Runter | + | -1° bis -45° | - | 1° bis 45° | - | 0° | + | 0° | - | 0° | + | 0° | + | -1° bis -45° | - | 1° bis 45° |
| | | | | | | | | | | | | | | | | |
| -X Rückwärts +Y Rechts | - | 0° | + | 1° bis 45° | + | 0° | - | -1° bis -45° | + | 1° bis 45° | - | 0° | - | -1° bis -45° | + | 0° |
| -X Rückwärts -Y Links | - | -1° bis -45° | + | 0° | + | 1° bis 45° | - | 0° | + | 0° | - | -1 ° bis -45° | - | 0° | + | 1° bis 45° |
| -X Rückwärts -Z Hoch | - | -1° bis -45° | + | 1° bis 45° | + | 0° | - | 0° | + | 0° | - | 0° | - | -1° bis -45° | + | 1° bis 45° |
| -X Rückwärts +Z Runter | - | 0° | + | 0° | + | 1° bis 45° | - | -1° bis -45° | + | 1° bis 45° | - | -1 ° bis -45° | - | 0° | + | 0° |
| +X Vorwärts +Y Rechts -Z Hoch | + | 0° | - | 0° | - | 0° | + | -1° bis -45° | - | 1° bis 45° | + | 0° | + | 0° | - | 0° |
| +X Vorwärts + Y Rechts +Z Runter | + | 0° | - | 1° bis 45° | - | 0° | + | 0° | - | 0° | + | 0° | + | -1° bis -45° | - | 0° |
| +X Vorwärts -Y Links -Z Hoch | + | 0° | - | 0° | - | 1° bis 45° | + | 0° | - | 0° | + | -1 ° bis -45° | + | 0° | - | 0° |
| +X Vorwärts -Y Links +Z Runter | + | -1° bis -45° | - | 0° | - | 0° | + | 0° | - | 0° | + | 0° | + | 0° | - | 1° bis 45° |
| | | | | | | | | | | | | | | | | |
| -X Rückwärts +Y Rechts -Z Hoch | - | -1° bis -45° | + | 0° | + | 0° | - | 0° | + | 0° | - | 0° | - | 0° | + | 1° bis 45° |
| -X Rückwärts +Y Rechts +Z Runter | - | 0° | + | 0° | + | 1° bis 45° | - | 0° | + | 0° | - | -1 ° bis -45° | - | 0° | + | 0° |
| -X Rückwärts -Y Links -Z Hoch | - | 0° | + | 1° bis 45° | + | 0° | - | 0° | + | 0° | - | 0° | - | -1° bis -45° | + | 0° |
| -X Rückwärts -Y Links +Z Runter | - | 0° | + | 0° | + | 0° | - | -1° bis -45° | + | 1° bis 45° | - | 0° | - | 0° | + | 0° |
| | | | | | | | | | | | | | | | | |
| + Y Rechts -Z Hoch | - | -1° bis -45° | 0 | 0° | 0 | 0° | + | -1° bis -45° | - | 1° bis 45° | 0 | 0° | 0 | 0° | + | 1° bis 45° |
| +Y Rechts +Z Runter | 0 | 0° | - | 1° bis 45° | + | 1° bis 45° | 0 | 0° | 0 | 0° | - | -1 ° bis -45° | + | -1° bis -45° | 0 | 0° |
| -Y Links -Z Hoch | 0 | 0° | + | 1° bis 45° | - | 1° bis 45° | 0 | 0° | 0 | 0° | + | -1 ° bis -45° | - | -1° bis -45° | 0 | 0° |
| -Y Links +Z Runter | + | -1° bis -45° | 0 | 0° | 0 | 0° | - | -1° bis -45° | + | 1° bis 45° | 0 | 0° | 0 | 0° | - | 1° bis 45° |
| | | | | | | | | | | | | | | | | |
| +X Vorwärts +Gieren | + | 0° | - | 0° | - | 0° | + | 0° | - | 0° | + | -1 ° bis -45° | + | 0° | - | 1° bis 45° |
| +X Vorwärts -Gieren | + | 0° | - | 0° | - | 0° | + | 0° | - | 1° bis 45° | + | 0° | + | -1° bis -45° | - | 0° |
| -X Rückwärts +Gieren | - | -1° bis -45° | + | 0° | + | 1° bis 45° | - | 0° | + | 0° | - | 0° | - | 0° | + | 0° |
| -X Rückwärts -Gieren | - | 0° | + | 1° bis 45° | + | 0° | - | -1° bis -45° | + | 0° | - | 0° | - | 0° | + | 0° |

**Tabelle 2: Weitere exemplarische Parameter für Steuerung der Luftschiffantriebsmittelanordnung**

| **Bewegungsrichtung (X,Y,Z)** | **AM** | **AK** | **AM** | **AK** | **AM** | **AK** | **AM** | **AK** | **AM** | **AK** | **AM** | **AK** | **AM** | **AK** | **AM** | **AK** |
|---|---|---|---|---|---|---|---|---|---|---|---|---|---|---|---|---|
| **ID No** | **1** | **1** | **2** | **2** | **3** | **3** | **4** | **4** | **5** | **5** | **6** | **6** | **7** | **7** | **8** | **8** |
| +X Vorwärts | + | 0° | - | 0° | - | 0° | + | 0° | - | 0° | + | 0° | + | 0° | - | 0° |
| -X Rückwärts | + | 180° | - | 180° | - | 180° | + | 180° | - | 180° | + | 180° | + | 180° | - | 180° |
| +Y Rechts | + | 90° | - | 90° | - | -90° | + | -90° | - | 90° | + | 90° | + | -90° | - | -90° |
| -Y Links | + | -90° | - | -90° | - | 90° | + | 90° | - | -90° | + | -90° | + | 90° | - | 90° |
| -Z Hoch | + | 90° | - | -90° | - | 90° | + | -90° | - | 90° | + | -90° | + | 90° | - | -90° |
| +Z Runter | + | -90° | - | 90° | - | -90° | + | 90° | - | -90° | + | 90° | + | -90° | - | 90° |
| +Nicken | + | 1 bis 90° | - | -1 bis -90° | - | 1 bis 90° | + | -1 bis -90° | - | -1 bis -90° | + | 1 bis 90° | + | -1 bis -90° | - | 1 bis 90° |
| -Nicken | + | -1 bis -90° | - | 1 bis 90° | - | -1 bis -90° | + | 1 bis 90° | - | 1 bis 90° | + | -1 bis -90° | + | 1 bis 90° | - | -1 **bis** -90° |
| +Rollen | + | 90° | - | 90° | - | 90° | + | 90° | - | 90° | + | 90° | + | 90° | - | 90° |
| -Rollen | + | -90° | - | -90° | - | -90° | + | -90° | - | -90° | + | -90° | + | -90° | - | -90° |
| -Gieren Links | + | 180° | - | 0° | - | 180° | + | 0° | - | 180° | + | 0° | + | 180° | - | 0° |
| +Gieren Rechts | + | 0° | - | 180° | - | 0° | + | 180° | - | 0° | + | 180° | + | 0° | - | 180° |
| | + | | - | | - | | + | | - | | + | | + | | - | |
| +X Vorwärts +Y Rechts | + | 45° | - | 45° | - | -45° | + | -45° | - | 45° | + | 45° | + | -45° | - | -45° |
| +X Vorwärts -Y Links | + | -45° | - | -45° | - | 45° | + | 45° | - | -45° | + | -45° | + | 45° | - | 45° |
| +X Vorwärts -Z Hoch | + | 45° | - | -45° | - | 45° | + | -45° | - | 45° | + | -45° | + | 45° | - | -45° |
| +X Vorwärts +Z Runter | + | -45° | - | 45° | - | -45° | + | 45° | - | -45° | + | 45° | + | -45° | - | 45° |
| | + | | - | | - | | + | | - | | + | | + | | - | |
| -X Rückwärts +Y Rechts | + | 135° | - | 135° | - | -135° | + | -135° | - | 135° | + | 135° | + | -135° | - | -135° |
| -X Rückwärts -Y Links | + | -135° | - | -135° | - | 135° | + | 135° | - | -135° | + | -135° | + | 135° | - | 135° |
| -X Rückwärts -Z Hoch | + | 135° | - | -135° | - | 135° | + | -135° | - | 135° | + | -135° | + | 135° | - | -135° |
| -X Rückwärts +Z Runter | + | -135° | - | 135° | - | -135° | + | 135° | - | -135° | + | 135° | + | -135° | - | 135° |
| +X Vorwärts +Y Rechts -Z Hoch | + | 45° | - | 0° | - | 0° | + | -45° | - | 45° | + | 0° | + | 0° | - | -45° |
| +X Vorwärts + Y Rechts +Z Runter | + | 0° | - | 45° | - | -45° | + | 0° | - | 0° | + | 45° | + | -45° | - | 0° |
| +X Vorwärts -Y Links -Z Hoch | + | 0° | - | -45° | - | 45° | + | 0° | - | 0° | + | -45° | + | 45° | - | 0° |
| +X Vorwärts -Y Links +Z Runter | + | -45 | - | 0° | - | 0° | + | 45° | - | -45° | + | 0° | + | 0° | - | 45° |
| | + | | - | | - | | + | | - | | + | | + | | - | |
| -X Rückwärts +Y Rechts -Z Hoch | + | 135° | - | 0° | - | 0° | + | -135° | - | 135° | + | 0° | + | 0° | - | -135° |
| -X Rückwärts +Y Rechts +Z Runter | + | 0° | - | 135° | - | -135° | + | 0° | - | 0° | + | 135° | + | -135° | - | 0° |
| -X Rückwärts -Y Links -Z Hoch | + | 0° | - | -135° | - | 135° | + | 0° | - | 0° | + | -135° | + | 135° | - | 0° |
| -X Rückwärts -Y Links +Z Runter | + | -135° | - | 0° | - | 0° | + | 135° | - | -135° | + | 0° | + | 0° | - | 135° |
| | + | | - | | - | | + | | - | | + | | + | | - | |
| +Y Rechts -Z Hoch | + | 90° | 0 | 0° | 0 | 0° | + | -90° | - | 90° | 0 | 0° | 0 | 0° | - | -90° |
| +Y Rechts +Z Runter | 0 | 0° | - | 90° | - | -90° | 0 | 0° | 0 | 0° | + | 90° | + | -90 | 0 | 0° |
| -Y Links -Z Hoch | 0 | 0° | - | -90° | - | 90° | 0 | 0° | 0 | 0° | + | -90° | + | 90° | 0 | 0° |
| -Y Links +Z Runter | + | -90° | 0 | 0° | 0 | 0° | + | 90° | - | -90° | 0 | 0° | 0 | 0° | - | 90° |
| | + | | - | | - | | + | | - | | + | | + | | - | |
| +X Vorwärts +Gieren | + | 0° | 0 | 0° | - | 0° | 0 | 0° | - | 0° | 0 | 0° | + | 0° | 0 | 0° |
| +X Vorwärts -Gieren | 0 | 0° | - | 0° | 0 | 0° | + | 0° | 0 | 0° | + | 0° | 0 | 0° | - | 0° |
| -X Rückwärts +Gieren | 0 | 180° | - | 180° | 0 | 180° | + | 180° | 0 | 180° | + | 180° | 0 | 180° | - | 180° |
| -X Rückwärts -Gieren | + | 180° | 0 | 180° | - | 180° | 0 | 180° | - | 180° | 0 | 180° | + | 180° | 0 | 180° |
| +X Vorwärts +Y Rechts -Z Hoch | + | 45° | - | 0° | - | 0° | + | -45° | - | 45° | + | 0° | + | 0° | - | -45° |
| +X Vorwärts + Y Rechts +Z Runter | + | 0° | - | 45° | - | -45° | + | 0° | - | 0° | + | 45° | + | -45° | - | 0° |
| +X Vorwärts -Y Links -Z Hoch | + | 0° | - | -45° | - | 45° | + | 0° | - | 0° | + | -45° | + | 45° | - | 0° |

### BEZUGSZEICHENLISTE

- (1.0): Luftschiff
- (1.1): Luftschiffhülle
- (1.2): Stützstruktur
- (2.1): Erster Freiheitsgrad (Vorwärts-/Rückwärtsbewegung)
- (2.2): Zweiter Freiheitsgrad (Seitwärtsbewegung)
- (2.3): Dritter Freiheitsgrad (Aufwärts-/Abwärtsbewegung)
- (2.4): Vierter Freiheitsgrad (Gieren)
- (2.5): Fünfter Freiheitsgrad (Nicken)
- (2.6): Sechster Freiheitsgrad (Rollen)
- (3.0): Antriebsmittel
- (3.1): Antriebsachse
- (3.2): Antriebsradius
- (3.3): Rotor
- (3.4): Erste Gruppe
- (3.5): Zweite Gruppe
- (4.0): Antriebsmittelträgerelement
- (4.1): Erste Trägerelementgruppe
- (4.2): Zweite Trägerelementgruppe
- (4.3): Ankerelement
- (4.4): Ankerachse
- (5.0): Aktuator
- (6.0): Längsachse
- (6.1): Schnittwinkel

## Patentansprüche

1. Eine **Luftschiffantriebsmittelanordnung,** angeordnet an einem Luftschiff (1.0), zum direkten Manövrieren und Antreiben des Luftschiffes (1.0) in sechs Freiheitsgraden (2.1, 2.2, 2.3, 2.4, 2.5, 2.6), aufweisend zumindest:
- sechs Antriebsmittelträgerelemente (4.0), angeordnet in einer ersten Trägerelementgruppe (4.1) im vorderen Drittel des Luftschiffes (1.0), und einer zweiten Trägerelementgruppe (4.2), angeordnet im hinteren Drittel des Luftschiffes (1.0),
- wobei an jedem Antriebsmittelträgerelement (4.0) ein Antriebsmittel (3.0), angeordnet ist, wobei das Antriebsmittel (3.0) beabstandet zu einer Luftschiffhülle (1.1) angeordnet ist,
- wobei die Antriebsmittel jeweils eine Antriebsachse (3.1) und einen Antriebsradius (3.2) aufweisen,
- wobei jedes Antriebsmittelträgerelement (4.0) an einem Ankerelement (4.3) angeordnet ist, wobei das Ankerelement (4.3) eine Ankerachse (4.4) aufweist,
- wobei das Ankerelement (4.3) direkt auf der Luftschiffhülle (1.1) angeordnet ist,
**gekennzeichnet dadurch, dass**
das Antriebsmittelträgerelement (4.0) einen Aktuator (5.0) aufweist,
wobei das Antriebsmittelträgerelement (4.0) als Finne oder Ruder ausgestaltet ist,
wobei die Antriebsmittel dazu eingerichtet sind, den Gesamtschub zum direkten Manövrieren und Antreiben eines Luftschiffes (1.0) in sechs Freiheitsgraden bereitzustellen,
wobei jedes Antriebsmittel (3.0), bevorzugt unabhängig von allen anderen Antriebsmitteln (3.0), durch den am Antriebsmittelträgerelement (4.0) angeordneter Aktuator (5.0) schwenkbar angeordnet ist, sodass die Ausrichtung der Antriebsachse (3.1) relativ zur Ankerachse (4.4) geändert werden kann.

2. Luftschiffantriebsmittelanordnung nach Anspruch 1, wobei der Aktuator (5.0) zwischen Antriebsmittelträgerelement (4.0) und dem Ankerelement angeordnet ist.

3. Luftschiffantriebsmittelanordnung nach Anspruch 1, wobei die Antriebsmittelträgerelemente (4.0) fest an den Ankerelementen (4.3) befestigt sind und der Aktuator (5.0) zwischen dem Antriebsmittel (3.0) und dem Antriebsmittelträgerelement (4.0) angeordnet ist.

4. Luftschiffantriebsmittelanordnung nach einem der Ansprüche 1 bis 3, wobei die Anzahl der Antriebsmittel (3.0) acht beträgt, wobei jeweils zumindest ein Antriebsmittel (3.0) an einem Antriebsmittelträgerelement (4.0) angeordnet ist und jeweils 4 Antriebsmittelträgerelemente (4.0) in der ersten und der zweiten Trägerelementgruppe (4.3) angeordnet sind.

5. Luftschiffantriebsmittelanordnung nach einem der Ansprüche 1 bis 4, **dadurch gekennzeichnet, dass** die Ankerelemente (4.3) der Antriebsmittelträgerelemente (4.0) innerhalb der ersten und/oder zweiten Trägerelementgruppe (4.1, 4.2) um die Luftschiffhülle (1.1) im Wesentlichen geometrisch gleichmäßig verteilt angeordnet sind, wobei im Wesentlichen geometrisch gleichmäßig verteilt bedeutet, dass jedes Antriebsmittelträgerelement (4.0) innerhalb eines Bereiches von +/-25° des Schnittwinkels (6.1) in einer geometrisch gleichmäßigen Verteilung der Ankerelemente (4.3) angeordnet ist.

6. Luftschiffantriebsmittelanordnung nach einem der Ansprüche 1 bis 5, wobei zumindest jeweils zwei, bevorzugt alle, Antriebsmittelträgerelemente (4.0) innerhalb einer Trägerelementgruppe (4.1, 4.2) auf einer Ebene, die orthogonal zur Längsachse (6.0) des Luftschiffes steht, angeordnet sind.

7. Luftschiffantriebsmittelanordnung nach einem der Ansprüche 1 bis 6, wobei ein beabstandetes Antriebsmittel mindestens ein Abstand des 1,25-fachen des Antriebsradius der Antriebsachse von der Luftschiffhülle (1.1) aufweist.

8. Luftschiffantriebsmittelanordnung nach einem der Ansprüche 1 bis 7, wobei die Antriebsachse (3.1) um zwischen 0° und +/- 180° im Bezug zur Ankerachse (4.4) schwenkbar ist.

9. Luftschiffantriebsmittelanordnung nach einem der Ansprüche 1 bis 8, wobei die Antriebsmittel (3.0) in einer ersten Gruppe (3.4) und einer zweiten Gruppe (3.5) von jeweils 3 bis 6 Antriebsmitteln (3.0) um die Luftschiffhülle (1.1) angeordnet sind, wobei die erste Gruppe (3.4) im vorderen Drittel des Luftschiffes (1.0) und die zweite Gruppe (3.5) im hinteren Drittel des Luftschiffes (1.0) angeordnet ist.

10. Ein **Luftschiff (1.0),** die Luftschiffantriebsmittelanordnung nach einem der Ansprüche 1 bis 9 aufweisend.

11. Luftschiff (1.0) nach Anspruch 10, wobei das Luftschiff ein unstarres, halbstarres oder starres Luftschiff (1.0) ist.

12. Ein **Verfahren zum Steuern** eines Luftschiffes (1.0), wobei das Luftschiff (1.0) eine Luftschiffantriebsmittelanordnung nach einem der Ansprüche 1 bis 9 aufweist, umfassend die Schritte:
a) Registrierung einer Richtungsanweisung, vorzugsweise eines digitalen Signals einer Steuervorrichtung oder Steuerungsrecheneinheit,
b) Rotieren zumindest eines Antriebsmittels und ändern des Schubvektors dieses Antriebsmittels,
c) Anpassung des Schubes dieses zumindest eines Antriebsmittels
d) Messung der Richtungsänderung durch zumindest einen Sensor.
